# EUROPÄISCHE PATENTSCHRIFT

(11) **EP 2 620 324 B1**
(45) Veröffentlichungstag und Bekanntmachung des Hinweises auf die Patenterteilung: **02.03.2016**
(21) Anmeldenummer: 12198040.3
(22) Anmeldetag: 19.12.2012
(51) Int. Cl.: B60P 3/20, B60P 3/00

(54) **Straßenfahrzeug sowie Verfahren zu dessen Betrieb**
Road vehicle and method for the operation of same
Véhicule routier et son procédé de fonctionnement

(30) Priorität: 24.01.2012 DE 102012100566
(43) Veröffentlichungstag der Anmeldung: 31.07.2013
(73) Patentinhaber: Zentis Logistik Service GmbH, 52070 Aachen (DE)
(72) Erfinder: Biermeier, Andreas, 52159 Roetgen (DE); Heinrichs, Josef, 52222 Stolberg (DE)
(74) Vertreter: Bauer, Dirk

(56) Entgegenhaltungen:
- WO-A1-00/01554
- WO-A1-2010/002644
- DE-U1- 29 807 134
- US-A- 3 308 845
- US-A- 3 810 487
- US-A1- 2002 189 836
- US-A1- 2003 034 147
- US-A1- 2008 164 082

## Beschreibung

Die Erfindung betrifft ein Straßenfahrzeug zum Transport von Behältnissen, mit einem von einer Ladefläche, Wänden und einer Decke begrenzten Laderaum, aufweisend mindestens eine Verbrennungskraftmaschine, die mit einem elektrischen Generator mechanisch gekoppelt ist, wobei mittels des elektrischen Generators eine elektrische Spannung erzeugbar ist, und mindestens einen elektrischen Steckverbinder, der von dem elektrischen Generator mit der elektrischen Spannung versorgbar ist und an den ein elektrischer Verbraucher anschließbar ist, wobei an dem elektrischen Steckverbinder eine Wechselspannung von mindestens 90 V, vorzugsweise von mindestens 100 V, anliegt. Siehe z.B. US 3308845 oder WO 2010/002644 A1.

### Stand der Technik

Straßenfahrzeuge, insbesondere Lastkraftwagen (LKW), weisen typischerweise eine Vielzahl elektrischer Verbraucher auf. Als solche sind sowohl fest verbaute Systeme wie die Klimaanlage und elektrisches Licht als auch individuelle Geräte wie Kühlschrank, Mikrowelle und Fernseher zu nennen. Insbesondere die individuell von einem jeweiligen Fahrzeugführer in dem Straßenfahrzeug angeschlossenen Teile bedürfen der Möglichkeit, separat an eine Spannungsquelle angeschlossen zu werden. Der Bedarf an elektrischen Verbrauchern, der über die fest vom Hersteller des jeweiligen Straßenfahrzeugs installierten Geräte hinausgeht, steigt dabei typischerweise im Verhältnis zu der Dauer, die der Fahrzeugführer in dem Straßenfahrzeug verbringt. Somit ist beispielsweise der Wunsch nach einem Fernseher oder einem Kühlschrank normalerweise insbesondere dann gegeben, wenn der Fahrzeugführer über mehrere Tage hinweg in dem jeweiligen Straßenfahrzeug verbringt. Die Versorgung mit elektrischer Energie ist entsprechend wichtig.

Während der Fahrt kann die Erzeugung von Elektrizität besonders einfach mittels einer so genannten "Lichtmaschine" realisiert werden, die von dem jeweiligen das Straßenfahrzeug antreibenden Motors betrieben wird. Im Fall von LKW-Transporten, die sich über längere Zeiträume erstrecken, ist jedoch die Einhaltung gewisser Ruhezeiten erforderlich, in denen sich der Fahrzeugführer ausruhen beziehungsweise schlafen kann oder dergleichen. Während es in solchen Fällen nicht unüblich ist, dass der Motor des Fahrzeugs auch beim Stillstand desselben nicht abgeschaltet wird, um weiter Strom produzieren zu können, zeigt beispielsweise die US 2003/0034147 A1 einen Generator, der die Versorgungslücke der Stromversorgung im Zuge der Abschaltung des Motors überbrücken soll. Das als "idle eliminator" bezeichnete Gerät verhindert somit, dass der Motor des Fahrzeugs dauerhaft betrieben werden muss, nur um den Fahrer beziehungsweise das Führerhaus des Straßenfahrzeugs mit elektrischer Energie zu versorgen. Das in der US-Schrift offenbarte Gerät eignet sich insbesondere dazu, eine Wechselspannung von 115 V bis 120 V, also die in den USA typische Versorgungsspannung zu erzeugen, so dass der Fahrzeugführer jederzeit handelsübliche Geräte zur Erhöhung seines Komforts anschließen und verwenden kann. Der Generator ist dabei explizit zur Überbrückung der Ruhezeiten des den LKW antreibenden Motors vorgesehen.

Neben der Versorgung von elektrischen Verbrauchern, die den Aufenthalt des Fahrzeugsführers in dem Straßenfahrzeug angenehmer gestalten sollen, kann es von besonderer Bedeutung sein, dass ein Laderaum des Straßenfahrzeugs auf bestimmte Art und Weise betrieben wird. Hier ist insbesondere die Klimatisierung der Laderäume zu nennen, die beispielsweise für den Transport solcher Waren wichtig ist, die dauerhaft gekühlt werden müssen und bei denen eine Unterbrechung der Kühlkette nicht tolerabel ist. Folglich verfügen derartige Straßenfahrzeuge typischerweise über eine Klimatisierungseinheit, die außerhalb des Laderaums des Straßenfahrzeuges angeordnet ist, und ebenfalls einen Energieverbraucher darstellt. Der Bedarf an Energie für derartige Kühlaggregate ist streckenweise so gravierend, dass sie über einen separaten Motor verfügen, der den Kompressor der zugehörigen Kältemaschine betreibt. Da eine Kühlung des Ladegutes unabhängig davon stattzufinden hat, ob das Straßenfahrzeug gerade still steht oder bewegt wird, laufen solche Motoren typischerweise dauerhaft, das heißt insbesondere auch dann, wenn das Straßenfahrzeug bewegt wird. Sollte das Straßenfahrzeug abgestellt werden, kann es möglich sein, das Klimatisierungsaggregat an ein externes Stromnetz anzuschließen und so zu betreiben, ohne dass der Motor genutzt werden muss.

Die US 2008/0164082 A1 schlägt angesichts eines zusätzlichen Energielieferanten in Form einer gesonderten Verbrennungskraftmaschine zum Betrieb eines Kühlaggregats für den Laderaum vor, diese Verbrennungskraftmaschine zur Generierung elektrischer Energie zu verwenden und auf diese Weise sowohl das Kühlaggregat als auch das Führerhaus des Straßenfahrzeuges dauerhaft zu versorgen, also auch im Falle eines Stillstandes der eigentlichen Zugmaschine des Straßenfahrzeugs sowie dessen Motors. Hierfür wird die Verbrennungskraftmaschine an einen elektrischen Generator ("Lichtmaschine") angeschlossen, der Gleichstrom erzeugt. Dieser Generator versorgt anschließend sowohl das Kühlaggregat als auch eine Batterie mit elektrischer Energie. Mittels eines Gleichstrom-Wechselstrom-Konverters ist es schließlich möglich, die von der Batterie entnommene Energie zu konvertieren, so dass auch solche Verbraucher angeschlossen werden können, die Wechselspannung erfordern. Gleichfalls ist es möglich, die Gleichspannung direkt zu verwenden. Die letztgenannte US-Schrift offenbart somit ebenso wie die erstgenannte US-Schrift eine Lösung, um das Führerhaus des Straßenfahrzeuges dauerhaft mit elektrischer Energie zu versorgen, wobei der für den Vortrieb des Straßenfahrzeuges genutzte Motor entweder nicht durchgängig oder sogar gar nicht zur Erzeugung des elektrischen Stroms benötigt wird. Die Anordnung von Stromzapfstellen im Führerhaus dient dazu, dem Fahrer den Aufenthalt in seinem Fahrzeug möglichst angenehm zu gestalten. Insbesondere ist es ihm möglich, einen Fernseher, eine Mirkowelle oder dergleichen zu betreiben.

In einer weiteren Patentanmeldung, der US 2003/0019509 A1 ist eine mobile Autowaschanlage beschrieben. Diese ist in Form eines Anhängers ausgeführt, der mittels eines Zugfahrzeugs bewegt an einen Einsatzort werden kann. Insbesondere ist die Autowaschanlage von einer externen Versorgung im Wesentlichen unabhängig, so dass sie in einer Einsatzposition, in der der Anhänger an dem Einsatzort abgestellt ist, direkt einsatzbereit ist. Für den stationären Einsatz verfügt der Waschraum der mobilen Autowaschanlage auch über elektrische Steckverbinder, mittels denen benötigtes Reinigungsequipment mit Strom versorgt werden kann. Die hierfür benötigte elektrische Energie kann beispielsweise mittels eines an der Waschanlage angeordneten Generators erzeugt werden.

Ebenfalls lediglich für einen stationären Einsatz an einem Einsatzort geeignet ist ein Campingmodul, das aus der Patentanmeldung US 2003/0197043 A1 bekannt ist. Dieses zeigt ein Campingmodul, das in einen Heckbereich eines handelsüblichen PKW installiert werden kann. In einer vorteilhaften Ausgestaltung verfügt das Campingmodul über ein elektrisches System, umfassend einen Energiespeicher in Form einer Batterie sowie Zapfstellen zum Anschluss elektrischer Verbraucher.

Ein weiteres Dokument, die DE 103 27 585 A1, beschreibt einen mobilen Generator zur Versorgung elektrischer Verbraucher an einem Einsatzort, beispielsweise einem Campingplatz oder auf außerhalb gelegenen Baustellen. Hierzu ist ein Fahrzeug gezeigt, das mit einem elektrischen Generator ausgestattet ist, der mittels des Fahrzeugs an den jeweiligen Einsatzort bewegt werden kann, um dort stationär eingesetzt zu werden.Neben dem aufgezeigten Problem der Versorgung des Führerhauses eines Straßenfahrzeuges mit elektrischer Energie sowie der Klimatisierung des Laderaums eines Straßenfahrzeuges (beispielsweise eines Sattelzuges) kann es bei kritischem Transportgut darüber hinaus notwendig sein, dieses gesondert zu behandeln. Als Beispiel seien hier Waren genannt, die vor der Auslieferung an einen weiterverarbeitenden Betrieb sowohl vor als auch (und vor allem) während des Transports der Ware zum Empfänger dauerhaft mittels eines Rührwerks in Bewegung gehalten werden müssen. Als weiteres Beispiel ist denkbar, dass einzelne im Laderaum transportierte Waren eine gewisse Mindesttemperatur benötigen, um ihre zugesicherten Eigenschaften nicht zu verlieren, während alle übrigen im Laderaum befindlichen Waren eine gewisse Maximaltemperatur nicht überschreiten dürfen. In einem solchen Fall kann es notwendig werden, dass der gesamte Laderaum gekühlt werden muss, während einzelne Waren gezielt erwärmt werden müssen. Nach dem Stand der Technik sind Möglichkeiten, eine solche individuelle Behandlung einzelner Ladungsgüter vorzusehen, nicht bekannt.

### Aufgabe

Der Erfindung liegt daher die Aufgabe zugrunde, ein Straßenfahrzeug hervorzubringen, bei dem im Laderaum befindliche Güter sowohl während der Fahrt des Straßenfahrzeugs als auch während dessen Stillstands gesondert versorgt beziehungsweise betrieben werden können.

### Lösung

Die zugrunde liegende Aufgabe wird in vorrichtungstechnischer Hinsicht ausgehend von dem Straßenfahrzeug der eingangs beschriebenen Art erfindungsgemäß dadurch gelöst, dass mindestens ein elektrischer Steckverbinder in dem Laderaum des Straßenfahrzeuges angeordnet ist.

Unter dem Begriff des Straßenfahrzeugs sind hier jegliche Fahrzeuge zu verstehen, die auf Straßen, Wegen oder dergleichen am öffentlichen Straßenverkehr teilnehmen. Dabei bezieht sich der Begriff des Straßenfahrzeugs sowohl auf "aktive" Fahrzeuge wie beispielsweise Autos und Sattelschlepper beziehungsweise Sattelzugmaschinen, die einen eigenen Antrieb aufweisen, als auch auf "passive" Fahrzeuge, die mittels eines weiteren Fahrzeugs gezogen oder geschoben werden und keinen eigenen Antrieb aufweisen. Für die Gattung der passiven Fahrzeuge seien beispielsweise Anhänger und (Sattel-)Auflieger genannt.

Der Begriff des Laderaums ist als ein solcher Raum des Straßenfahrzeugs zu verstehen, der gesondert für den Transport von Gegenständen, insbesondere zu transportierenden Waren, geeignet ist. Insbesondere sind hierunter Laderäume von Kleintransportern bis hin zu Laderäumen von Sattelaufliegern zu verstehen, wobei derartige Laderäume typischerweise ein umbautes Ladevolumen von ca. 10 m³ bis hin zu 150 m³ aufweisen können.

Durch die Anordnung mindestens eines elektrischen Steckverbinders in dem Laderaum ist es besonders einfach möglich, elektrische Verbraucher, die in dem Laderaum abgestellt sind, anzuschließen und zu betreiben. Da der mindestens eine elektrische Steckverbinder dauerhaft mit dem elektrischen Generator verbunden ist, der wiederum von der Verbrennungskraftmaschine betrieben wird, und auf diese Weise mit einer elektrischen (Wechsel-)Spannung versorgt ist, ist es ohne weiteres möglich, einen elektrischen Verbraucher, der an den Steckverbinder angeschlossen ist, sowohl bei einem Stillstand des Straßenfahrzeugs als auch während einer Fahrt desselben zu betreiben. Auf diese Weise können auch höchste Anforderungen an Lagerungsbedingungen anspruchsvoller Waren erfüllt werden, indem mittels der dauerhaft zur Verfügung gestellten Spannung jegliche elektrische Verbraucher betrieben werden können, die notwendig sind, um die jeweilig zur transportierende Ware bedarfsgerecht zu konditionieren. So ist es beispielsweise möglich, ein gewisses Transportgut mittels eines angeschlossenen Rührwerks ständig zu rühren und/oder eine Temperierung des Transportgutes vorzunehmen, wobei insbesondere einzelne in dem Laderaum befindliche Waren individuell temperiert werden können. Mittels der Bereitstellung einer (Wechsel-)Versorgungsspannung von mindestens 90 V, vorzugsweise mindestens 100 V, ist es möglich, über das Kleinspannungssystem (12 V) hinaus, das typischerweise bei Straßenfahrzeugen stets vorhanden ist, elektrische Verbraucher mit genügend elektrischer Leistung zu versorgen, um die für die Beförderung sensibler Waren notwendigen Umgebungsbedingungen zu schaffen. Dabei erzeugt der elektrische Generator das genannte Spannungslevel selbst und bedarf keiner Umwandlung oder Spannungstränsformation, um ein derartiges Wechselspannungsniveau zu erreichen.

Besonders vorteilhaft ist ein solcher elektrischer Generator, der eine Dreiphasenwechselspannung erzeugt. Diese Art von Versorgungsspannung ist weit verbreitet und ermöglicht gegenüber einem einphasigen Wechselstromsystem den Einsatz dünnerer Leitungen bei vergleichbar hoher elektrischer Leistung.

Insbesondere für den Einsatz des Straßenfahrzeuges in Europa ist es besonders von Vorteil, wenn eine Spannung, die zwischen jedem einzelnen der drei Außenleiter und einem Neutralleiter anliegt, zwischen 200 V und 260 V, vorzugsweise zwischen 225 V und 235 V, werter vorzugsweise 230 V, beträgt. Dieses Wechselspannungsniveau ist typisch für weite Teile Europas so dass durch eine Versorgung des mindestens einen elektrischen Steckverbinders mit dieser Spannung eine höchstmögliche Kompatibilität mit üblichen Stromverbrauchern erreicht werden kann. Ferner ist es besonders einfach möglich, Spannung zwischen zwei Außenleitern abzugreifen, zwischen denen typischerweise eine Spannung von 400 V anliegt. Auf diese Weise können selbst solche elektrischen Verbraucher mit Energie versorgt werden, die eine erhöhte Leistungsaufnahme haben ("Starkstrom").

Das erfindungsgemäße Straßenfahrzeug ist mit einem Steuermodul ausgestattet, das zwischen den elektrischen Generator und den mindestens einen elektrischen Steckverbinder geschaltet ist, wobei mittels des Steuermoduls eine elektrische Verbindung zwischen dem Generator und dem Steckverbinder derart steuerbar ist, dass Schaltintervalle programmierbar sind. Mittels eines solchen Steuermoduls ist es beispielsweise besonders einfach möglich, eine Versorgung der elektrischen Steckverbinder mit elektrischer Spannung derart einzustellen, dass ein angeschlossener elektrischer Verbraucher nur in gewissen Intervallen betrieben wird. Durch die Programmierbarkeit kann auf diese Weise Energie gespart werden, sofern eine dauerhafte Versorgung des Verbrauchers mit elektrischer Energie nicht notwendig ist. Ein separater Eingriff - beispielsweise durch ein manuelle betätigen eines Ein/Aus-Schalters durch den Fahrzeugführer - entfällt somit.

Im Zusammenhang mit einem solchen Steuermodul kann ferner die Anordnung eines in dem Steuermodul angeordneten Datenloggers vorteilhaft sein, mittels dessen eine Steuerung des mindestens einen elektrischen Steckverbinders protokollierbar ist. Mittels des Datenloggers aufgezeichnete Daten über die Versorgung des mindestens einen elektrischen Steckverbinders mit elektrischer Spannung sowie beispielsweise über die Leistungsaufnahme des angeschlossenen Verbrauchers kann mitunter dabei behilflich sein, eine exakte und vorschriftsmäßige Behandlung des Ladegutes belegen zu können und sich mit Hilfe eines solchen Beleges bei einem Mangel des Ladegutes vor Mängelansprüchen auf Basis eines geltend gemachten unsachgemäßen Transports zu schützen.

Zwecks einer einfachen Erreichbarkeit für den Fahrzeugführer oder eine sonstige Person ist es zu bevorzugen, das Steuermodul von einer Außenseite des Straßenfahrzeugs zugänglich an dem Straßenfahrzeug anzubringen, vorzugsweise auf einer Außenseite einer der Wände des Straßenfahrzeugs anzuordnen. Alternativ kann eine Anbringung eines universellen Steuermoduls im Führerhaus des Straßenfahrzeuges sinnvoll sein, wobei insbesondere ein gegebenenfalls auftretender Verkabelungsaufwand zu beachten ist, der anfallen kann, sobald das den Laderaum bereitstellende Straßenfahrzeug wechselt (beispielsweise ein anderer Sattelauflieger mit dem Sattelschlepper gekoppelt wird).

Besonders vorteilhaft ist ein solches Straßenfahrzeug, welches eine Vielzahl von elektrischen Steckverbindern in dem Laderaum aufweist, wobei sämtliche Steckverbinder mittels des elektrischen Generators mit der elektrischen Spannung versorgbar sind. Durch die Vielzahl von elektrischen Steckverbindern ist analog der Anschluss einer Vielzahl von elektrischen Verbrauchern möglich. Auf diese Weise kann eine große Stückzahl eines extra mit Energie zu versorgenden Ladegutes transportiert werden.

Sofern mehrere Steckverbinder vorgesehen werden, ist es besonders vorteilhaft, wenn das Straßenfahrzeug mit einer Verteilstation ausgerüstet wird, die die von dem elektrischen Generator erzeugte elektrischen Spannung an die Vielzahl der elektrischen Steckverbinder verteilt, wobei jeder Steckverbinder einzeln, an die Verteilstation angeschlossen ist. Auf diese Weise kann ein Verkabelungsaufwand zur Installation der Vielzahl von elektrischen Steckverbindern erheblich reduziert werden.

Um in der Anordnung des mit elektrischer Energie zu versorgenden Ladegutes möglichst frei zu sein, ist es ferner besonders vorteilhaft, wenn die Vielzahl von elektrischen Steckverbindern über eine Länge des Laderaums verteilt an einer seitlichen Wand des Laderaums angeordnet ist, wobei die ein Abstand zwischen zwei benachbarten Steckverbinder vorzugsweise zwischen 1 m und 10 m betragen sollte. Durch eine solche Verteilung der Steckverbinder ist eine Beladung des Laderaums des Straßenfahrzeugs unabhängig von dem Standort des jeweiligen mit Strom zu versorgenden Ladegutes, da vorteilhafterweise entlang des gesamten Laderaumes Steckverbinder zur Verfügung stehen.

Hinsichtlich der Kompatibilität der elektrischen Steckverbinder, sollten diese als Schuko Stecker (230 V) oder als 3L+N+PE 6h-Stecker ("CEE-Stecker"; 400 V) ausgeführt sein. Um bei dem Anschluss der jeweilig zu versorgenden elektrischen Verbraucher möglichst flexibel zu sein, ist es darüber hinaus empfehlenswert, wenn die elektrischen Steckverbinder als Steckverbindereinheiten ausgeführt werden, wobei eine Steckverbindereinheit vorzugsweise mindestens zwei elektrische Steckverbinder aufweist und weiter vorzugsweise der eine Steckverbinder als Schuko Stecker und der andere Steckverbinder als 3L+N+PE 6h-Stecker ausgeführt sind. Auf diese Weise ist der Laderaum des Straßenfahrzeuges besonders flexible beladbar, da entlang der gesamten Länge desselben sowohl ein 230 V-Anschluss als auch ein 400 V-Anschluss vorhanden sind. Bei der Beladung des Laderaums ist es daher nicht weiter vonnöten, die Stellung der jeweiligen Ladegüter in Abhängigkeit von deren Leistungsaufnahme zu planen. Mit der entfallenden Planung sinkt folglich auch die Fehleranfälligkeit.

Hinsichtlich des Antriebs des elektrischen Generators kann es besonders von Vorteil sein, wenn die Verbrennungskraftmaschine, die mit diesem gekoppelt ist, ausschließlich den Zweck des Antriebs des Generators erfüllt und darüber hinaus keinen weiteren Aufgaben übernimmt. Alternativ kann es hingegen ebenso zu bevorzugen sein, die Verbrennungskraftmaschine gerade nicht ausschließlich für den Generator zu verwenden. Beide Herangehensweisen zum Antrieb des elektrischen Generators bieten Vor- und Nachteile.

Hinsichtlich der isolierten Lösung, also der ausschließlichen Verwendung der Verbrennungskraftmaschine zum Betrieb des Generators, ist als Vorteil zu nennen, dass ein selektiver Einsatz des Stromversorgungssystems möglich ist, das heißt ein Generatormodul, welches den Generator und die Verbrennungskraftmaschine umfasst, nur dann eingesetzt wird, wenn es erforderlich ist. Für diesen Vorteil ist es insbesondere entscheidend, in welcher Menge und in welcher Häufigkeit Güter transportiert werden, die dauerhaft - also sowohl beim Stillstand (Parken) des Straßenfahrzeugs als auch während der Fahrt - mit elektrischer Energie versorgt werden müssen, um ihre zugesicherten Eigenschaften nicht zu verlieren. In Abhängigkeit von dieser Häufigkeit kann es beispielsweise für ein Speditionsunternehmen wirtschaftlich nachteilig sein, jedes Straßenfahrzeug der vorhandenen Fahrzeugflotte mit einem elektrischen Generator auszurüsten und diesen an einen vorhandenen Verbrennungskraftmotor zu koppeln, sofern ein Einsatz eines dieser Vorrichtung nur selten erforderlich wird. Bei einer solchen Konstellation kann es hingegen deutlich sinnvoller sein, ein separates System aus Verbrennungskraftmaschine und Generator (Generatormodul) zu nutzen, das je nach Bedarf an dem Straßenfahrzeug angeordnet werden kann und nach Belieben entfernt und beispielsweise an ein anderes Straßenfahrzeug montiert werden kann. Mittels einer solchen Betriebsweise ist bereits die Anschaffung und Wartung weniger Generatoren ausreichend, um sämtliche Aufträge, die eine separate Stromversorgung im Laderaum erfordern, abwickeln zu können.

Bei einer solchen Vorrichtung ist es besonders von Vorteil, wenn die Verbrennungskraftmaschine abnehmbar an dem Straßenfahrzeug angeordnet ist, insbesondere mittels eines lösbaren Schnellverschlusses an dem Straßenfahrzeug befestigt ist. Selbiges gilt für den elektrischen Generator, wobei vorzugsweise der Generator und die Verbrennungskraftmaschine, die mechanisch miteinander gekoppelt sind, als eine Einheit in Form eines Generatormoduls vorliegen und folglich als eine Einheit an dem Straßenfahrzeug angeordnet beziehungsweise wieder entfernt werden können. Unter dem Begriff "Schnellverschluss" ist dabei zu verstehen, dass eine Montage des Generatormoduls mit wenigen Handgriffen innerhalb weniger Minuten möglich ist.

Um eine solche separate, lediglich temporär an dem Straßenfahrzeug angeordnete Verbrennungskraftmaschine mit Kraftstoff zu versorgen, ist es vorteilhaft, diese an einen eigenen Kraftstofftank anzuschließen, der an oder in dem Straßenfahrzeug angeordnet ist. Am Beispiel des Sattelzuges, der einen vorderen Sattelschlepper und einen aufliegenden Sattelauflieger aufweist, bedeutet dies, dass dieser Kraftstofftank an dem Sattelauflieger angeordnet sein sollte, so dass der Sattelzug in seiner Gesamtheit über zwei Kraftstofftanks verfügt, wobei ein weiterer zur Versorgung der Verbrennungskraftmaschine dient, die den Sattelzug antreibt. Letzterer ist typischerweise am Sattelschlepper angeordnet.

Die alternativ aufgezeigte Lösung, die zum Antrieb des Generators eine Verbrennungskraftmaschine vorsieht, die ohnehin bereits an dem Straßenfahrzeug angeordnet ist, kann insbesondere dann vorteilhaft sein, wenn ein Transport solcher mit Strom zu versorgender Güter regelmäßig stattfindet und ein Großteil des vorhandenen Fuhrparks mit einer solchen Erweiterung ausgestattet werden soll und darüber hinaus die verwendeten Straßenfahrzeuge bereits über Klimatisierungsaggregate verfügen, mittels denen eine Temperatur innerhalb des Laderaums des Straßenfahrzeugs regulierbar ist, wobei diese Klimatisierungsaggregate mittels einer Kompressionskältemaschine betrieben werden. Diese Kompressionskältemaschinen weisen jeweils einen Kompressor auf, der typischerweise mittels einer eigenen Verbrennungskraftmaschine angetrieben wird und mit diesem mechanisch verbunden ist. Bei einer solchen Konstellation kann es besonders vorteilhaft sein, den elektrischen Generator mit der für das Klimatisierungsaggregat genutzten Verbrennungskraftmaschine zu koppeln und auf diese Weise die elektrische Spannung zu erzeugen, wobei gleichzeitig das Klimatisierungsaggregat beziehungsweise der zugehörige Kompressor betrieben wird. Insbesondere ist es möglich, ein kombiniertes System aus Kompressor, Generator und Verbrennungskraftmaschine vorzusehen, wobei die Verbrennungskraftmaschine nur dann für den Antrieb des Kompressors und des Generators genutzt wird, so lange kein externes Stromnetz verfügbar ist (beispielsweise während einer Fahrt oder auf einem Abstellplatz, an dem kein Stromanschluss verfügbar ist). Sollte hingegen der Anschluss an ein externes Stromnetz möglich sein, könnte vielmehr die elektrische Maschine, die bisher lediglich als elektrischer Generator genutzt wurde, als Elektromotor genutzt werden und seinerseits den Kompressor des Klimatisierungsaggregats antreiben. Die elektrischen Steckverbinder in dem Laderaum des Straßenfahrzeuges könnten in letztgenanntem Fall direkt, das heißt ohne Umweg über die elektrische Maschine, mittels des externen Stromnetzes versorgt werden.

Sollte ein Klimatisierungsaggregat vorhanden sein, kann es im Fall eines lediglich seltenen Einsatzes des elektrischen Generators aus vorstehend genannten Gründen vorteilhaft sein, trotz der bereits vorhandenen Verbrennungskraftmaschine, die den Kompressor des Klimageräts antreibt, eine gesonderte Verbrennungskraftmaschine an dem Straßenfahrzeug vorzusehen. Bei einer solchen Konstellation, bei der insgesamt drei Verbrennungskraftmaschinen vorhanden sind (jeweils eine für den Antrieb des Zugfahrzeugs, des Kompressors und des Generators), ist es besonders vorteilhaft, wenn der Motor des Zufahrzeugs einen eigenen Kraftstofftank verwendet und die Motoren des Kompressors sowie des Generators auf den selben Kraftstofftank zugreifen.

Wie bereits aus den Beispielen deutlich geworden ist, ist insbesondere ein solches Straßenfahrzeug im Sinne der Erfindung von Interesse, bei dem es sich um einen Sattelauflieger handelt. Andere Straßenfahrzeuge - insbesondere Anhänger - sind jedoch ohne weiteres vorstellbar. Bei dem Straßenfahrzeug allgemein und bei einem Sattelauflieger im Speziellen handelt es sich typischerweise um einen solchen mit einem isolierten, das heißt mit einer Wärmedämmung eingefassten, Laderaum, da die Verwendung gesonderter Stromanschlüsse im Laderaum insbesondere für den Transport von zu temperierenden Waren von Interesse ist. Üblicherweise werden gleichzeitig Waren transportiert, die gekühlt werden müssen, wobei einzelne Waren gleichzeitig eine gewisse Mindesttemperatur behalten müssen. Letztere können mittels des erfindungsgemäßen Straßenfahrzeuges mit elektrischer Energie versorgt und so individuell erhitzt werden, beispielsweise mittels eines Heizdrahtes.

### Ausführungsbeispiele

Das erfindungsgemäße Straßenfahrzeug wird anhand der Ausführungsbeispiele, die in den Figuren dargestellt sind, näher erläutert.

Es zeigen:
- Fig. 1:: Einen Schnitt durch ein erfindungsgemäßes Straßenfahrzeug,
- Fig. 2:: Einen Aufbauplan des erfindungsgemäßen Straßenfahrzeuges und
- Fig. 3:: einen Aufbauplan eines weiteren erfindungsgemäßen Straßenfahrzeuges.

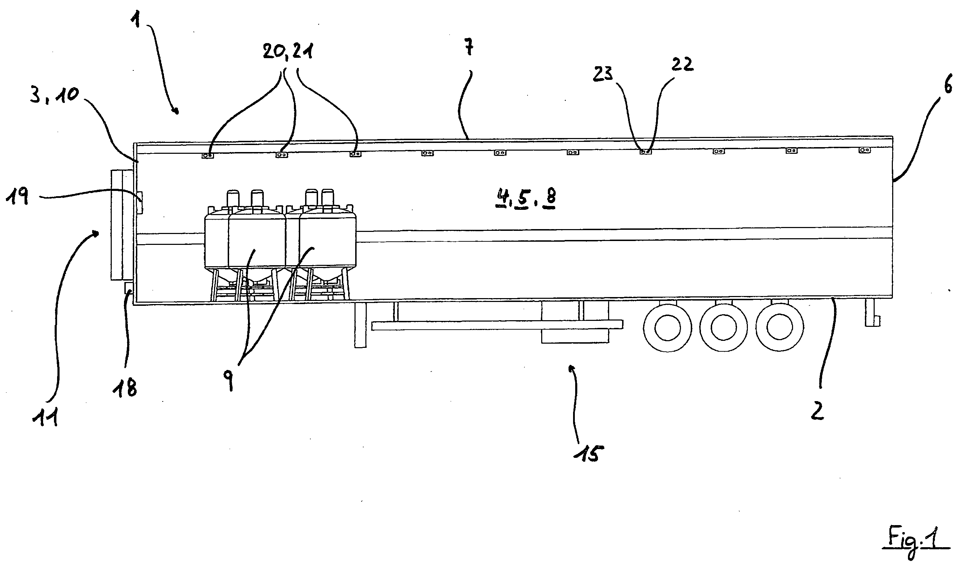

Als erstes Ausführungsbeispiel ist in Figur 1 ein Schnitt durch ein erfindungsgemäßes Straßenfahrzeug 1 dargestellt. Bei diesem Straßenfahrzeug 1 handelt es sich um einen Sattelauflieger, der typischerweise von einem Sattelschlepper beziehungsweise einer Sattelzugmaschine bewegt wird. Das Straßenfahrzeug 1 weist eine Ladefläche 2 sowie Wände 3, 4, 5, 6 und eine Decke 7 auf, wobei sämtliche Teile mit einer Wärmedämmung versehen sind, so dass es besonders einfach ist, ein Temperaturniveau im Inneren des Straßenfahrzeuges 1 zu halten. Gemeinsam begrenzen die Ladefläche 2, die Wände 3, 4, 5, 6 und die Decke 7 einen Laderaum 8. Dieser weist eine Länge von knappen 14 m auf.

Im gezeigten Beispiel sind insgesamt vier Behältnisse 9 auf der Ladefläche 2 abgestellt. Bei diesen Behältnissen 9 handelt es sich um so genannte "Heiz-Rührfässer", welche über ein mit elektrischem Strom betriebenes Rührwerk sowie in einer Mantelfläche angeordnete Heizdrähte verfügen. Mittels einer Versorgung der Behältnisse 9 mit elektrischem Strom kann das Rührwerk ebenso wie die Heizdrähte in Betrieb genommen werden, wobei ein jeweils in den Behältnissen befindlicher Inhalt gleichzeitig gerührt und erhitzt werden kann.

An einer vorderen Stirnwand 10 des Straßenfahrzeuges 1 ist zusätzlich ein Klimatisierungsaggregat 11 angeordnet, welches genutzt werden kann, um den Laderaum 8 des Straßenfahrzeuges 1 auf eine gewünschte Temperatur einzustellen. Dieses Klimatisierungsaggregat 11 ist hinsichtlich der Versorgung mit Energie unabhängig und weist eine eigene Verbrennungskraftmaschine 12 auf, die mit einem Kompressor 13 des Klimatisierungsaggregats 11 mechanisch gekoppelt ist. Sowohl die Verbrennungskraftmaschine 12 als auch der Kompressor 13 sind in Figur 1 nicht gesondert dargestellt. Die Verbrennungskraftmaschine 12 ist an einen in Figur 1 nicht dargestellten Kraftstofftank 14 angeschlossen und wird aus diesem mit dem nötigen Kraftstoff versorgt.

An einer Unterseite der Ladefläche 2 des Straßenfahrzeuges 1 ist ferner ein Generatormodul 15 angeordnet, welches eine weitere Verbrennungskraftmaschine 16 sowie einen elektrischen Generator 17 aufweist, wobei der Generator 17 mechanisch mit der Verbrennungskraftmaschine 16 gekoppelt ist. Die zweite Verbrennungskraftmaschine 16 ist ebenfalls an den Kraftstofftank 14 angeschlossen und wird aus diesem mit Kraftstoff versorgt. Die Verbrennungskraftmaschine 16 sowie der elektrische Generator 17 sind nicht einzeln in Figur 1 erkennbar.

Sobald die Verbrennungskraftmaschine 16 in Betrieb genommen wird, wird gleichzeitig der mit dieser gekoppelte Generator 17 betrieben. Letzterer ist dazu geeignet, eine Dreiphasenwechselspannung zu erzeugen, wobei zwischen jeweiligen Außenleitern und einem Nullleiter eine Wechselspannung von 230 V anliegt. Der Generator 17 ist mittels einer Verkabelung an ein Steuermodul 18 angeschlossen. Dieses Steuermodul 18 ist von einer Außenseite des Straßenfahrzeuges 1 her an der vorderen Stirnwand 10 angeordnet, so dass es von der Außenseite aus erreichbar ist. Das Steuermodul 18 weist eine Recheneinheit (CPU) auf und ist derart ausgestattet, dass es für einen Anwender ohne weiteres möglich ist, bestimmte Schaltprogramme zu implementieren. Ferner weist das Steuermodul 18 einen nicht dargestellten Datenlogger auf, der dazu dient, Betriebszeiten, Schaltintervalle und dergleichen, also allgemeine Betriebsdaten des Generators 17 aufzuzeichnen und auf diese Weise im Nachhinein nachvollziehbar festzuhalten.

An das Steuermodul 18 sind schließlich einzelne Stromleitungen angeschlossen, die in Figur 1 nicht gesondert dargestellt sind. Diese Stromleitungen sind von dem Steuermodul 18 zu einer Verteilstation 19 geführt. Diese Verteilstation ist ebenfalls an der vorderen Stirnwand 10 des Straßenfahrzeuges angeordnet, wobei die Verteilstation 10 auf einer Innenseite des Laderaums 8 positioniert ist. An die Verteilstation 19 sind schließlich eine Vielzahl einzelner elektrischer Steckverbinder 20 angeschlossen. Diese Steckverbinder 20 sind im gezeigten Beispiel über eine Länge des Straßenfahrzeuges 1 verteilt an einer Innenseite der seitlichen Wand 4 des Straßenfahrzeuges 1 angeordnet, wobei ein Abstand zwischen den einzelnen Steckverbindern 20 in etwa 1,5 m beträgt. Ferner sind die Steckverbinder 20 hier als Steckverbindereinheiten 21 ausgeführt, wobei jede Steckverbindereinheit 21 über zwei einzelne Steckverbinder 20 verfügt. Jeweils einer dieser Steckverbinder 20 ist dabei als "Schuko Stecker" 22 und der jeweils andere als "3L+N+PE 6h-Stecker" 23 ausgeführt. Während bei dem Schuko Stecker 22 die bereitgestellte Wechselspannung zwischen jeweils einem Außenleiter und einem Nullleiter abgegriffen wird (230 V), wird an dem 3L+N+PE 6h-Stecker 23 die Wechselspannung jeweils zwischen zwei Außenleitern abgegriffen, wobei sich eine Spannung von 400 V ergibt.

Diese Steckverbinder 20 sind schließlich dazu geeignet, elektrische Verbraucher - wie beispielsweise die Behältnisse 9 - mit elektrischem Strom zu versorgen. Hierfür müssen die Behältnisse 9 und hier insbesondere das jeweilige Rührwerk sowie der jeweilige Heizdraht mit einem elektrischen Steckverbinder 20 verbunden werden. Sollte beispielsweise ein dauerhafter Betrieb eines Rührwerks eines Behältnisses 9 nicht notwendig sein, ist es möglich, dieses lediglich in gewissen Zeitintervallen zu betreiben, indem das Steuermodul 18 entsprechend programmiert wird und die von dem elektrischen Generator 17 produzierte Spannung lediglich periodisch zur Verfügung gestellt, das heißt "durchgeleitet", wird. Die Verwendung des Steuermoduls 18 ist dabei insofern vorteilhaft, als dass eine individuelle Schaltung eines jeden einzelnen Steckverbinders 20 möglich ist (ein An- und Ausschalten des gesamten Generators 17 beziehungsweise der Verbrennungskraftmaschine 16 würde stets einem Abschalten sämtlicher Steckverbinder 20 gleichkommen) und ferner mittels des Datenloggers eine genaue Aufzeichnung über die Betriebszeiten und dergleichen erstellt werden kann.

In Abhängigkeit von der Notwendigkeit einer Versorgung mit elektrischem Ström innerhalb des Laderaums 8 des Straßenfahrzeuges 1 kann es unwirtschaftlich sein, das Generatormodul 15 dauerhaft an dem Straßenfahrzeug zu montieren. Der Anschaffungspreis des Generatormoduls 15 könnte derart hoch sein, dass dieser bei gegebenenfalls lediglich wenigen Fahrten des Straßenfahrzeuges 1 pro Jahr, bei denen eine Stromversorgung mit Wechselspannung im Laderaum 9 notwendig ist, nicht wieder eingespielt werden kann. Dies gilt insbesondere dann, wenn eine größere Flotte von Straßenfahrzeugen 1 vorhanden ist. Eine Ausstattung eines jeden einzelnen mit einem eigenen Generatormodul 15 wäre nur dann sinnvoll, wenn dieses für die Erfüllung vieler Aufträge notwendig wäre.

Um beispielsweise als Spediteur auf den Vorteil einer haushaltsüblichen Stromversorgung (230 V Wechselspannung) beziehungsweise einer Versorgung mit "Starkstrom" (400 V Drehstrom) auch bei relativ geringem Bedarf nicht verzichten zu müssen und dennoch wirtschaftlich arbeiten zu können, ist es daher von besonderem Vorteil, wenn das Generatormodul 15 in seiner Gesamtheit lösbar an dem Straßenfahrzeug angebracht ist. Lösbar bedeutet hier, dass das Generatormodul 15 innerhalb weniger Minuten mittels eines Schnellverschlusssystems an der Unterseite der Ladefläche 2 befestigt und ebenso zügig wieder entfernt werden kann. Auf diese Weise können bereits durch Vorhalten lediglich weniger Generatormodule 15 selektiv bestimmte Straßenfahrzeuge 1 je nach Bedarf mit eben einem solchen ausgestattet werden, wodurch diese zum Transport von Waren geeignet sind, die einer Stromversorgung während der Fahrt beziehungsweise abseits eines festen Stromnetzes bedürfen. An fest vorzusehender Installation an jedem der vorhandenen Straßenfahrzeuge 1 fällt somit lediglich das Steuermodul 18, die Verteilstation 19 und die einzelnen Steckverbinder 20 beziehungsweise Steckverbindereinheiten 21 an. Bei der Verwendung eines lösbaren Generatormoduls 15 muss entsprechend lediglich eine lösbare Verbindung der Verbrennungskraftmaschine 16 zum vorhandenen Kraftstofftank sowie eine lösbare Verkabelung zwischen dem Generator 17 und dem Steuermodul 18 vorgesehen werden.

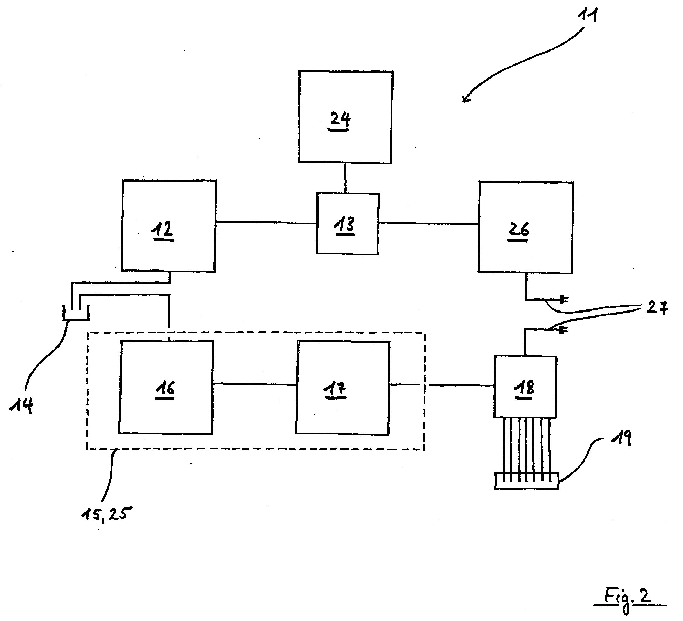

Eine Skizze eines einfachen Schaltplans, der dem Straßenfahrzeug 1 gemäß Figur 1 zugrunde liegt, ist in Figur 2 dargestellt. Diese zeigt schematisch das Klimatisierungsaggregat 11, welches die Verbrennungskraftmaschine 12, den Kompressor 13 und eine Kältemaschine 24 aufweist. Die Verbrennungskraftmaschine 12 ist mechanisch mit dem Kompressor 13 gekoppelt, welcher wiederum dem Antrieb der Kältemaschine 24 sorgt. Die Verbrennungskraftmaschine 12 ist an den Kraftstofftank 14 angeschlossen, aus dem sie den notwendigen Kraftstoff bezieht. Für den Fall, dass ein externes Stromnetz zur Verfügung steht, ist es ebenso möglich, den Kompressor 13 mittels eines Elektromotors 26 zu betreiben. Dieser wird dann mittels eines Versorgungskabels 27 an das Stromnetz angeschlossen.

An den Kraftstofftank 14 ist ferner die Verbrennungskraftmaschine 16 angeschlossen, welche Teil des Generatormoduls 15 ist. Zu diesem Generatormodul 15 gehört darüber hinaus der elektrische Generator 17. Das Generatormodul 15 ist in Figur 2 mittels einer unterbrochenen Linie 25 eingefasst. Das Generatormodul 15 ist lösbar an dem Straßenfahrzeug 1, welches in Figur 2 nicht dargestellt ist, angeordnet. Der Generator 17 ist mittels einer Leitung an das Steuermodul 18 angeschlossen. Dieses weist wiederum eine Vielzahl weiterer Leitungen auf, die das Steuermodul 18 mit der Verteilstation 19 verbinden. Jede der Leitungen ist für eine Ansteuerung eines einzelnen elektrischen Steckverbinders 20 geeignet. Ferner ist ein weiteres Versorgungskabel 27 an das Steuermodul 18 angeschlossen. Dieses ist dazu geeignet, das Steuermodul 18 direkt mit einem externen Stromnetz - wie es beispielsweise auf Rastplätzen oder sonstigen Stellorten vorhanden sein kann - zu verbinden. Auf diese Weise können - sofern ein externes Stromnetz vorhanden ist - die Steckverbinder 20 auch dann mit Wechselspannung versorgt werden, wenn das Generatormodul 15 nicht in Betrieb ist.

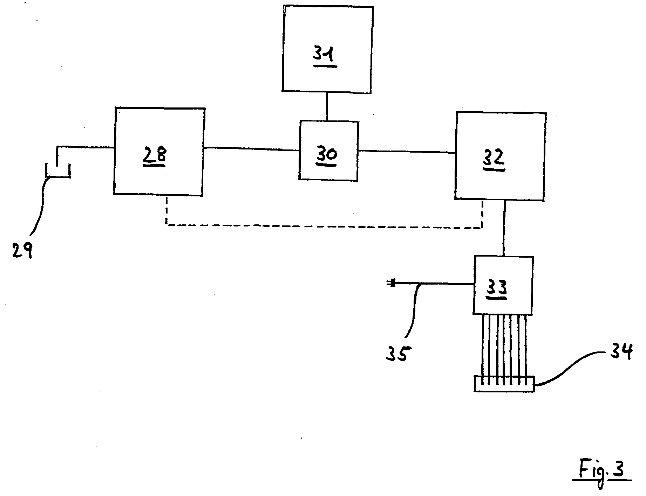

Eine alternative Schaltung geht aus dem Ausführungsbeispiel gemäß Figur 3 hervor. Hier ist insbesondere zu beachten, dass kein separates Generatormodul 15 im Sinne des ersten Ausführungsbeispiels vorliegt. Das Ausführungsbeispiel zeigt eine einzige Verbrennungskraftmaschine 28, die an einen Kraftstofftank 29 angeschlossen ist. Die Verbrennungskraftmaschine 28 dient zum einen dem Antrieb eines Kompressors 30 eines Klimatisierungsaggregats, wobei der Kompressor 30 eine Kältemaschine 31 antreibt. An den Kompressor 30 ist ferner eine elektrische Maschine 32 angeschlossen. Diese ist wiederum mit der Verbrennungskraftmaschine 28 verbunden (unterbrochene Linie). Außerdem sind ein Steuermodul 33 sowie im Weiteren eine Verteilstation 34 an die elektrische Maschine 32 angeschlossen. Die Bezeichnung "elektrische Maschine" 32 anstelle von "elektrischer Generator" ist insbesondere einer Doppelfunktion der elektrischen Maschine 32 geschuldet, welche im gezeigten Beispiel sowohl als Generator als auch als Elektromotor betrieben werden kann. Hierzu folgende Fallunterscheidung:
1. Das Straßenfahrzeug 1 ist nicht an ein externes Stromnetz angeschlossen (zum Beispiel während eines Transports). Die Verbrennungskraftmaschine 28 ist in Betrieb, wobei sie sowohl mit dem Kompressor 30 als auch mit der elektrischen Maschine 32 verbunden ist. Der Kompressor 30 wird zum Betrieb der Kältemaschine 31 verwendet. Die elektrische Maschine 32 dient derweil als elektrischer Generator und stellt entsprechend eine elektrische (Wechsel-)Spannung bereit, die gemäß dem Beispiel aus Figur 2 an das Steuermodul 33 und die Verteilstation 34 weitergeleitet wird. Im Unterschied zum vorigen Beispiel dient also eine einzige Verbrennungskraftmaschine 28 dem Betrieb des Klimatisierungsaggregats und fungiert ferner in Kombination mit der elektrischen Maschine 32 in ihrer Funktion als elektrischer Generator als Generatormodul im Sinne des ersten Ausführungsbeispiels.
2. Das Straßenfahrzeug 1 ist an ein externes Stromnetz angeschlossen (zum Beispiel auf einem Rastplatz). In diesem Fall ist es möglich, sowohl das Klimatisierungsaggregat, das heißt den Kompressor 30 zu betreiben, als auch das Steuermodul 33, das heißt die einzelnen elektrischen Steckverbinder, mit elektrischer Spannung zu versorgen. Hierfür muss lediglich ein Versorgungskabel 35, das an das Steuermodul 33 angeschlossen ist, mit dem externen Stromnetz verbunden werden. Die Verbrennungskraftmaschine 28 ist in diesem Fall außer Betrieb. Die elektrische Maschine 32 wirkt in diesem Fall als Elektromotor. Dieser kann darüber hinaus zum Anlassen der Verbrennungskraftmaschine 28 verwendet werden, sobald diese wieder in Betrieb genommen werden soll.

Im Unterschied zum ersten Ausführungsbeispiel ist die elektrische Maschine 32 in ihrer Funktion als elektrischer Generator nicht von dem Straßenfahrzeug 1 lösbar im Sinne einer schnellen Lösbarkeit mittels eines Schnellverschlusses.

### Bezugszeichenliste

- 1: Straßenfahrzeug
- 2: Ladefläche
- 3: Wand
- 4: Wand
- 5: Wand
- 6: Wand
- 7: Decke
- 8: Laderaum
- 9: Behältnis
- 10: Stirnwand
- 11: Klimatisierungsaggregat
- 12: Verbrennungskraftmaschine
- 13: Kompressor
- 14: Kraftstofftank
- 15: Generatormodul
- 16: Verbrennungskraftmaschine
- 17: Generator
- 18: Steuermodul
- 19: Verteilstation
- 20: Steckverbinder
- 21: Steckverbindereinheit
- 22: Schuko Stecker
- 23: 3L+N+PE 6h-Stecker
- 24: Kältemaschine
- 25: unterbrochene Linie
- 26: Elektromotor
- 27: Versorgungskabel
- 28: Verbrennungskraftmaschine
- 29: Kraftstofftank
- 30: Kompressor
- 31: Kältemaschine
- 32: elektrische Maschine
- 33: Steuermodul
- 34: Verteilstation
- 35: Versorgungskabel

## Patentansprüche

1. Straßenfahrzeug (1) zum Transport von Behältnissen (9), mit einem von einer Ladefläche (2), Wänden (3, 4, 5, 6) und einer Decke (7) begrenzten Laderaum (8), aufweisend mindestens eine Verbrennungskraftmaschine (16, 28), die mit einem elektrischen Generator (17) mechanisch gekoppelt ist, wobei mittels des elektrischen Generators (17) eine elektrische Spannung erzeugbar ist, und mindestens einen elektrischen Steckverbinder (20), der von dem elektrischen Generator (17) mit der elektrischen Spannung versorgbar ist und an den ein elektrischer Verbraucher anschließbar ist, wobei an dem elektrischen Steckverbinder (20) eine Wechselspannung von mindestens 90 V, vorzugsweise von mindestens 100 V, anliegt, wobei mindestens ein Steckverbinder (20) in dem Laderaum (8) des Straßenfahrzeuges (1) angeordnet ist, **gekennzeichnet durch** ein Steuermodul (18, 33), das zwischen den elektrischen Generator (17) und den mindestens einen elektrischen Steckverbinder (20) geschaltet ist, wobei mittels des Steuermoduls (18, 33) eine elektrische Verbindung zwischen dem Generator (17) und dem Steckverbinder (20) derart steuerbar ist, dass Schaltintervalle programmierbar sind.

2. Straßenfahrzeug (1) nach Anspruch 1, **dadurch gekennzeichnet, dass** der elektrische Generator (17) eine Dreiphasenwechselspannung erzeugt, wobei vorzugsweise eine Spannung, die jeweils zwischen einem von drei Außenleitern und einem Neutralleiter anliegt, zwischen 200 V und 260 V, vorzugsweise zwischen 225 V und 235 V, weiter vorzugsweise 230 V, beträgt.

3. Straßenfahrzeug (1) nach einem der Ansprüche 1 oder 2, **dadurch gekennzeichnet, dass** in dem Steuermodul (18, 33) ein Datenlogger angeordnet ist, mittels dessen eine Steuerung des mindestens einen elektrischen Steckverbinders (20) protokollierbar ist.

4. Straßenfahrzeug (1) nach einem der Ansprüche 1 bis 3, **dadurch gekennzeichnet, dass** das Steuermodul (18, 33) von einer Außenseite des Straßenfahrzeugs (1) zugänglich ist, vorzugsweise auf einer Außenseite einer der Wände (3, 4, 5, 6) des Straßenfahrzeugs (1) angeordnet ist.

5. Straßenfahrzeug (1) nach einem der Ansprüche 1 bis 4, **dadurch gekennzeichnet, dass** eine Vielzahl von elektrischen Steckverbindern (20) in dem Laderaum (8) angeordnet ist, wobei sämtliche Steckverbinder (20) mittels des elektrischen Generators (17) mit der elektrischen Spannung versorgbar sind, wobei das Straßenfahrzeug (1) vorzugsweise eine Verteilstation (19) aufweist, die die von dem elektrischen Generator (17) erzeugte elektrischen Spannung an die Vielzahl der elektrischen Steckverbinder (20) verteilt, wobei jeder Steckverbinder (20) einzeln an die Verteilstation (19) angeschlossen ist.

6. Straßenfahrzeug (19) nach Anspruch 5, **dadurch gekennzeichnet, dass** die Vielzahl von elektrischen Steckverbindern (20) über eine Länge des Laderaums (8) verteilt an einer seitlichen Wand (4, 5) des Laderaums (8) angeordnet ist, wobei die ein Abstand zwischen zwei benachbarten Steckverbindern (20) vorzugsweise zwischen 1 m und 10 m beträgt.

7. Straßenfahrzeug (1) nach einem der Ansprüche 1 bis 6, **dadurch gekennzeichnet, dass** der mindestens eine elektrische Steckverbinder (20) als Schuko Stecker (22) ausgeführt ist.

8. Straßenfahrzeug (1) nach einem der Ansprüche 1 bis 7, **dadurch gekennzeichnet, dass** der mindestens eine elektrische Steckverbinder (20) als 3L+N+PE 6h-Stecker (23) ausgeführt ist.

9. Straßenfahrzeug (1) nach einem der Ansprüche 1 bis 8, **gekennzeichnet durch** mindestens eine Steckverbindereinheit (21), die vorzugsweise zwei elektrische Steckverbinder (20) aufweist, wobei vorzugsweise der eine Steckverbinder (20) als Schuko Stecker (22) und der andere Steckverbinder als 3L+N+PE 6h-Stecker (23) ausgeführt sind.

10. Straßenfahrzeug (1) nach einem der Ansprüche 1 bis 9, **dadurch gekennzeichnet, dass** die Verbrennungskraftmaschine (16) ausschließlich mit dem elektrischen Generator (17) mechanisch gekoppelt ist, wobei die Verbrennungskraftmaschine (16) vorzugsweise abnehmbar an dem Straßenfahrzeug (1) angeordnet ist, insbesondere mittels eines lösbaren Schnellverschlusses an dem Straßenfahrzeug (1) befestigt ist, weiter vorzugsweise die Verbrennungskraftmaschine (28) an einen eigenen Kraftstofftank angeschlossen ist, der an dem Straßenfahrzeug (1) angeordnet ist.

11. Straßenfahrzeug (1) nach einem der Ansprüche 1 bis 10, **dadurch gekennzeichnet, dass** eine Temperatur innerhalb des Laderaums (8) des Straßenfahrzeugs (1) mittels eines eine Kältemaschine (24, 31) aufweisenden Klimatisierungsaggregats (11) veränderbar ist.

12. Straßenfahrzeug (1) nach Anspruch 11, **dadurch gekennzeichnet, dass** die Verbrennungskraftmaschine (28) zusätzlich zu dem elektrischen Generator außerdem mit einem Kompressor (30) der Kältemaschine (31) des Klimatisierungsaggregats (11) mechanisch gekoppelt ist.

13. Straßenfahrzeug (1) nach einem der Ansprüche 1 bis 12, **dadurch gekennzeichnet, dass** das Straßenfahrzeug (1) ein Sattelauflieger ist.

## Claims

1. Road vehicle (1) for transporting containers (9), having a loading space (8) that is delimited by a loading surface (2), walls (3, 4, 5, 6) and a ceiling (7), having at least one internal combustion engine (16, 28) that is mechanically coupled to an electric generator (17), wherein an electrical voltage can be generated by the electric generator (17), and at least one electrical connector (20) that can be supplied with the electrical voltage by the electric generator (17) and to which an electrical consumer can be connected, wherein an AC voltage of at least 90 V, preferably at least 100 V, is present at the electrical connector (20), wherein at least one electrical connector (20) is arranged in the loading space (8) of the road vehicle (1), **characterized by** a control module (18, 33) that is connected between the electric generator (17) and the at least one electrical connector (20), wherein an electrical connection between the generator (17) and the connector (20) is controllable by means of the control module (18, 33) in such manner that switching intervals are programmable.

2. Road vehicle (1) according to claim 1, **characterized in that** the electric generator (17) generates a three-phase AC voltage, wherein a voltage that is present preferably between each of three external wires and one neutral wire has a value between 200 V and 260 V, preferably between 225 V and 235 V, preferably 230 V.

3. Road vehicle (1) according to either of claims 1 or 2, **characterized in that** a data logger is arranged inside the control module (18, 33), by means of which a control of the at least one electrical connector (20) can be logged.

4. Road vehicle (1) according to any one of claims 1 to 3, **characterized in that** the control module (18, 33) is accessible from the outside of the road vehicle (1), and is preferably arranged on an outer side of one of the walls (3, 4, 5, 6) of the road vehicle (1).

5. Road vehicle (1) according to any one of claims 1 to 4, **characterized in that** a plurality of electrical connectors (20) is arranged inside the loading space (8), wherein all connectors (20) can be supplied with the electrical voltage by means of the electric generator (17), wherein the road vehicle (1) preferably has a distribution station (19) which distributes the electrical voltage generated by the electric generator (17) to the plurality of electrical connectors (20), wherein each electrical connector (20) is connected to the distribution station (19) individually.

6. Road vehicle (1) according to claim 5, **characterized in that** the plurality of electrical connectors (20) is distributed over a length of the loading space (8), distributed on a side wall (4, 5) of the loading space (8), wherein the one distance between two neighbouring connectors (20) is preferably between 1 m and 10 m.

7. Road vehicle (1) according to any one of claims 1 to 6, **characterized in that** the at least one electrical connector (20) is designed as a shockproof plug (22).

8. Road vehicle (1) according to any one of claims 1 to 7, **characterized in that** the at least one electrical connector (20) is designed as a 3L+N+PE 6h plug (23).

9. Road vehicle (1) according to any one of claims 1 to 8, **characterized by** at least one connector unit (21), which preferably has two electrical connectors (20), wherein the one electrical connector (20) is designed as a shockproof plug (22), and the other electrical connector is designed as a 3L+N+PE 6h plug (23).

10. Road vehicle (1) according to any one of claims 1 to 9, **characterized in that** the internal combustion engine (16) is mechanically coupled only to the electric generator (17), wherein the internal combustion engine (16) is preferably arranged on the road vehicle (1) so that it can be dismounted therefrom, and is particularly secured on the road vehicle (1) by means of a detachable quick-release mechanism, the internal combustion engine (16) is further preferably connected to its own fuel tank, which is arranged on the road vehicle (1).

11. Road vehicle (1) according to any one of claims 1 to 10, **characterized in that** a temperature inside the loading space (8) of the road vehicle (1) can be changed by means of an air conditioning unit (11) that includes a refrigeration machine (24, 31).

12. Road vehicle (1) according to claim 11, **characterized in that** the internal combustion engine (28) is mechanically coupled not only to the electric generator but also to a compressor (30) of the refrigeration machine (31) of the air conditioning unit (11).

13. Road vehicle (1) according to any one of claims 1 to 12, **characterized in that** the road vehicle (1) is a semitrailer.

## Revendications

1. Véhicule routier (1) pour le transport de conteneurs (9) avec un espace de chargement (8) limité par une surface de chargement (2), des parois (3,4,5,6) et un plafond (7) comportant au moins un moteur à combustion interne (16,28) qui est mécaniquement couplé avec un générateur électrique (17), pour lequel une tension électrique peut être produite au moyen du générateur électrique (17) et au moins un connecteur électrique (20), qui peut être alimenté en tension électrique parle générateur électrique (17) et sur lequel un consommateur électrique peut être connecté, pour lequel une tension alternative d'au moins 90 V, de préférence d'au moins 100 V, est appliquée au connecteur électrique (20), pour lequel au moins un connecteur (20) est disposé dans l'espace de chargement (8) du véhicule routier (1),**caractérisé par** un module de commande (18,33), qui est branché entre le générateur électrique (17) et au moins un connecteur électrique (20), pour lequel une liaison électrique entre le générateur (17) et le connecteur (20) peut être pilotée au moyen du module de commande (18, 33) de manière que les intervalles de commutation sont programmables.

2. Véhicule routier (1) selon la revendication 1 **caractérisé en ce que** le générateur électrique (17) produit une tension alternative triphasée, pour lequel de préférence une tension, qui est appliquée respectivement entre un des trois conducteurs extérieurs et un conducteur neutre, est entre 200 V et 260 V, de préférence entre 225 V et 235 V, de préférence encore de 230 V.

3. Véhicule routier (1) selon l'une quelconque des revendications 1 ou 2 **caractérisé en ce qu'**un enregistreur de données est disposé dans le module de commande (18, 33) au moyen duquel une commande d'au moins un connecteur électrique (20) peut être consignée.

4. Véhicule routier (1) selon l'une quelconque des revendications 1 à 3 **caractérisé en ce que** le module de commande (18,33) est accessible par un côté extérieur du véhicule routier (1), est disposé de préférence sur un côté extérieur d'une des parois (3,4,5,6) du véhicule routier (1).

5. Véhicule routier (1) selon l'une quelconque des revendications 1 à 4 **caractérisé en ce qu'**une pluralité de connecteurs électriques (20) est disposée dans l'espace de chargement (8), pour lequel tous les connecteurs (20) peuvent être alimentés en tension électrique au moyen du générateur électrique (17), pour lequel le véhicule routier (1) comporte de préférence un poste de distribution (19) qui distribue la tension électrique produite par le générateur électrique (17) à la pluralité des connecteurs électriques (20), chaque connecteur (20) étant individuellement connecté au poste de distribution (19).

6. Véhicule routier (1) selon la revendication 5 **caractérisé en ce que** la pluralité des connecteurs électriques (20) est disposée sur une paroi latérale (4,5) de l'espace de chargement (8) répartie sur une longueur de l'espace de chargement (8), pour lequel un espace entre deux connecteurs voisins (20) est de préférence entre 1 m et 10 m.

7. Véhicule routier (1) selon l'une quelconque des revendications 1 à 6 **caractérisé en ce qu'**au moins un connecteur électrique (20) est exécuté comme une fiche à contact de protection (22).

8. Véhicule routier (1) selon l'une quelconque des revendications 1 à 7 **caractérisé en ce qu'**au moins un connecteur électrique (20) est exécuté comme un connecteur 3L+N+PE 6h (23).

9. Véhicule routier (1) selon l'une quelconque des revendication 1 à 8 **caractérisé par** au moins une unité de connexion (21), comportant de préférence deux connecteurs électriques (20), un connecteur (20) étant exécuté de préférence comme une fiche à contact de protection (22) et l'autre connecteur comme une fiche 3L+N+PE 6 h (23).

10. Véhicule routier (1) selon l'une quelconque des revendications 1 à 9 **caractérisé en ce que** le moteur à combustion interne (16) est exclusivement mécaniquement couplé au générateur électrique (17), pour lequel le moteur à combustion interne (16) est disposé de préférence de manière amovible sur le véhicule routier (1), est en particulier fixé sur le véhicule routier (1) au moyen d'une fermeture rapide séparable, le moteur à combustion interne (16) est encore de préférence raccordé à un réservoir de carburant qui est disposé sur le véhicule routier (1).

11. Véhicule routier (1) selon l'une quelconque des revendications 1 à 10 **caractérisé en ce qu'**une température à l'intérieur de l'espace de chargement (8) du véhicule routier (1) peut être modifiée au moyen d'un groupe de climatisation (11) comportant une machine frigorifique (24,31).

12. Véhicule routier (1) selon la revendication 11 **caractérisé en ce que** le moteur à combustion interne (28) est mécaniquement couplé en plus du générateur électrique à un compresseur (30) de la machine frigorifique (31) du groupe de climatisation (11).

13. Véhicule routier (1) selon l'une quelconque des revendications 1 à 12 **caractérisé en ce que** le véhicule routier (1) est une semi-remorque.
